# FASCICULE DE BREVET EUROPEEN

(11) **EP 2 267 941 B1**
(45) Date de publication et mention de la délivrance du brevet: **22.08.2012**
(21) Numéro de dépôt: 10166897.8
(22) Date de dépôt: 22.06.2010
(51) Int. Cl.: H04L 12/24, H04L 12/403, H04L 12/28, H04W 64/00

(54) **Procédé d'association entre un appareil domestique et un équipement de gestion d'un système de commande à distance**
Verbindungsverfahren zwischen einem Haushaltsgerät und einer Steuerausrüstung eines ferngesteuerten Systems
Method for binding a home device to a management device of a remote control system

(30) Priorité: 23.06.2009 FR 0954242
(43) Date de publication de la demande: 29.12.2010
(73) Titulaire: Delta Dore, 35270 Bonnemain (FR)
(72) Inventeur: Giot, Lionel, 35520, MONTREUIL LE GAST (FR); Leduc, Benoît, 22830, PLOUHASNE (FR)
(74) Mandataire: Maillet, Alain

(56) Documents cités:
- EP-A1- 1 811 801
- WO-A1-97/29560
- US-A1- 2004 184 431
- US-A1- 2004 243 684

## Description

La présente invention concerne un procédé d'association entre au moins un appareil domestique et un équipement de gestion d'un système de commande à distance.

Il est connu des systèmes de commande d'appareils domestiques qui permettent à partir d'un équipement de gestion de commander, par émission d'un signal radiofréquence, soit individuellement chaque appareil domestique, soit simultanément un ensemble de ces appareils.

Pour cela, il est tout d'abord nécessaire que chaque nouvel appareil domestique s'identifie auprès de l'équipement de gestion, c'est ce qui est habituellement appelé la phase d'association. Pour cela, l'appareil domestique, par exemple lors de sa mise en fonctionnement, diffuse un identifiant unique, tel que son adresse MAC. L'équipement de gestion, à la réception de cet identifiant, identifie qu'un nouvel appareil domestique doit être associé, et lui transmet différentes informations pour communiquer avec lui.

Le document US2004/243684 divulgue un système de commande d'appareils domestiques, en particulier l'attribution des adresses et l'enregistrement des appareils connectés au réseau.

Cependant, certains appareils domestiques qui doivent être nouvellement associés avec l'équipement de gestion n'ont pas d'identifiants uniques, d'où l'impossibilité pour l'équipement de gestion d'identifier de manière unique chacun de appareils domestiques et donc de pouvoir les associer avec lui.

Le problème résolu par la présente invention est d'associer un appareil domestique n'ayant pas d'identifiant unique avec un équipement de gestion d'un système de commande à distance.

A cet effet, la présente invention concerne un procédé d'association entre au moins un appareil domestique et un équipement de gestion d'un système de commande à distance **caractérisé en ce qu**'il comporte une étape de découverte au cours de laquelle chaque appareil domestique détermine un identifiant temporaire qu'il émet à destination de l'équipement de gestion.

Ainsi, la réception d'un identifiant temporaire déterminé par chaque appareil domestique permet à l'équipement de gestion de détecter que de nouveaux appareils domestiques veulent s'associer avec lui.

Selon un mode de réalisation, un identifiant temporaire comporte en outre une valeur entière choisie aléatoirement parmi un ensemble prédéterminé de valeurs entières.

Le caractère aléatoire d'un identifiant temporaire évite que deux nouveaux appareils domestiques ne déterminent le même identifiant, ce qui ne permettrait pas à l'équipement de gestion de pouvoir distinguer chacun de ces deux appareils domestiques.

Selon une autre mode de réalisation, un identifiant temporaire comporte en outre une valeur qui indique le niveau de puissance d'une trame d'un signal reçue par un appareil domestique et émise préalablement par l'équipement de gestion.

Ce mode de réalisation est avantageux car il permet de déterminer l'ordre d'association des appareils domestiques selon le niveau de puissance reçu par chacun de ces appareils, c'est-à-dire selon leur distance avec l'équipement de gestion.

Selon un mode de réalisation, un identifiant temporaire comporte une valeur qui indique le niveau de puissance d'une trame d'un signal reçue par un appareil domestique et émise préalablement par l'équipement de gestion et d'une valeur choisie aléatoirement parmi un ensemble prédéterminé de valeurs entières.

Ce mode de réalisation est particulièrement avantageux lorsque plusieurs appareils domestiques à associer à l'équipement de gestion sont approximativement à la même distance de cet équipement de gestion. En effet, il permet de déterminer l'ordre d'association des appareils domestiques selon leur distance avec l'équipement de gestion tout en évitant que deux appareils domestiques n'émettent le même identifiant temporaire.

Selon une variante, un identifiant temporaire est émis par un appareil domestique si le niveau de puissance de la trame du signal reçue par cet appareil domestique est supérieur à un seuil prédéterminé.

Selon une autre variante, l'identifiant temporaire est émis par un appareil domestique quel que soit le niveau de puissance de la trame du signal reçue par cet appareil mais n'est considéré par l'équipement de gestion que si ce niveau de puissance est supérieur à un seuil prédéterminé.

Selon un mode de réalisation du procédé, le procédé est mis en oeuvre dans un système de commande à distance de type TDMA.

Selon un autre de ses aspects, la présente invention concerne un appareil domestique et un équipement de gestion d'un système de commande à distance de type TDMA qui mettent en oeuvre le procédé d'association ci-dessus.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente un système de commande d'appareils domestiques de type TDMA,
La Fig. 2 représente un exemple de la trame des signaux qui sont échangés lors du fonctionnement nominal d'un système de commande d'appareils domestiques de type TDMA,
La Fig. 3 représente un diagramme des étapes d'un mode de réalisation de l'étape de découverte du procédé d'association d'un appareil domestique avec un équipement de gestion,
La Fig. 4 représente un exemple de trame de découverte selon l'invention,
La Fig. 5 représente une illustration d'une variante du mode de réalisation du procédé d'association d'un appareil domestique avec un équipement de gestion, et
La Fig. 6 représente un synoptique de la structure interne d'un équipement de gestion et d'un appareil domestique mettant en oeuvre le mode de réalisation du procédé d'association d'un appareil domestique avec un équipement de gestion.

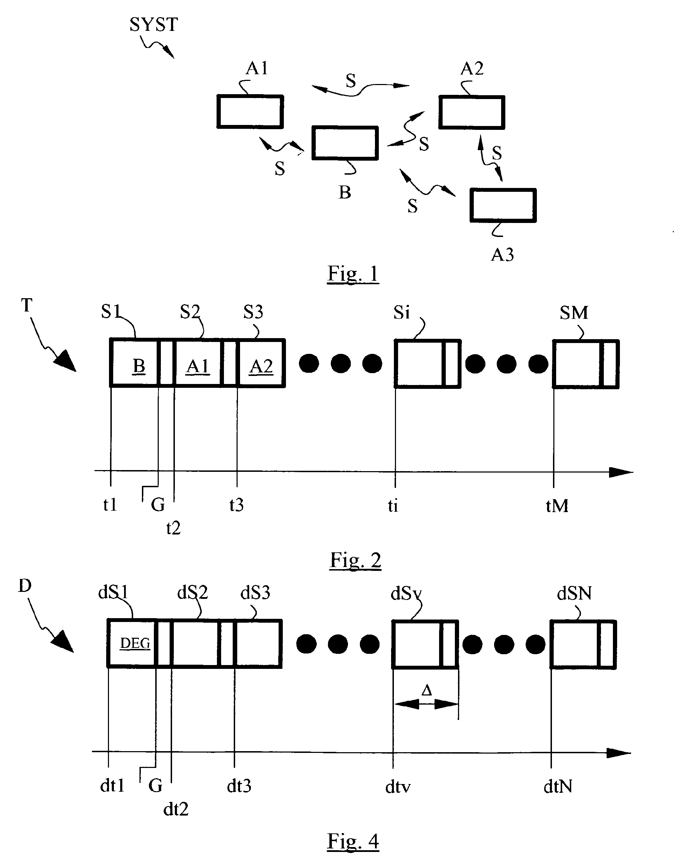

A la Fig. 1 est représenté un exemple de système SYST de commande à distance par signaux radiofréquences. Le système SYST comporte un équipement de gestion B et trois appareils domestiques A1, A2 et A3. La numérotation des appareils domestiques est faite, par exemple, selon leur distance vis-à-vis de l'équipement de gestion B ; l'appareil domestique A1 étant le plus proche et l'appareil domestique A3 étant le plus éloigné de l'équipement de gestion B.

Les appareils domestiques Ai (i=1,2,3) et l'équipement B sont munis de moyens de communication qui leur permettent d'échanger entre eux des signaux radiofréquences S.

Plus précisément, ces moyens de communication permettent à chaque appareil domestique de diffuser un signal S dans une zone géographique de rayon R et, permettent à chaque appareil domestique Ai ainsi qu'à l'équipement de gestion B de recevoir un signal S et d'en extraire les données qu'ils portent à la condition que le récepteur se trouve à une distance au plus égale à R de l'émetteur. Par la suite, nous considèrerons que les appareils domestiques et l'équipement de gestion sont à portée les uns des autres et qu'ils peuvent communiquer entre eux en fonctionnement normal.

De manière générale, la présente invention concerne un procédé d'association entre au moins un appareil domestique et un équipement de gestion d'un système de commande à distance **caractérisé en ce qu'**il comporte une étape de découverte au cours de laquelle chaque appareil domestique détermine un identifiant temporaire qu'il émet à destination de l'équipement de gestion.

Par la suite, le procédé d'association est décrit dans le cas où il est mis en oeuvre dans un système SYST de type TDMA.

Dans un système de commande à distance de type TDMA, l'utilisation temporelle de la bande de fréquence, qui est dédiée à l'application visée, est divisée en intervalles de temps, appelés slots, qui sont alors dédiés (alloués), soit à l'équipement de gestion, soit aux appareils domestiques. L'organisation temporelle de l'utilisation de la bande de fréquence, c'est-à-dire le positionnement temporel des slots, forme une trame du signal.

Ainsi, lorsque le système de commande à distance de type TDMA fonctionne en mode nominal, chaque appareil domestique et l'équipement de gestion émettent des données au cours d'un slot d'une trame qui leur est dédié et reçoivent les données qui leur sont destinées au cours des autres slots de la trame. On peut noter que plusieurs slots d'une même trame peuvent être dédiés par appareil domestique et/ou à l'équipement de gestion.

Ainsi, par échange préalable de signaux radiofréquences entre chaque appareil domestique et l'équipement de gestion, par exemple au cours de la phase d'association, un/des slots de trame est/sont dédié(s) à chaque appareil domestique.

La Fig. 2 représente un exemple de trame T des signaux qui sont échangés lors du fonctionnement nominal du système SYST. La trame T est formée de M slots notés sᵢ avec **i** allant de 1 à M. Chaque slot sᵢ débute à un temps tᵢ défini à partir d'un temps de référence t₁. On peut noter qu'un temps de garde G peut être aménagé entre chaque slot de la trame T.

Admettons que les appareils domestiques A1 et A2 soient déjà associés avec l'équipement de gestion B, c'est-à-dire que les appareils domestiques A1 et A2 et l'équipement de gestion B sont synchronisés entre eux en temps par connaissance à la fois du temps de référence t₁ et des temps de début tᵢ des slots qui leur sont dédiés. En l'occurrence, l'équipement de gestion B connaît le temps de début t₁ qui est relatif au slot s₁, l'appareil domestique A1 et l'équipement de gestion B connaissent le temps de début t₂ qui est relatif au slot s₂ dédié à cet appareil domestique et l'appareil domestique A2 et l'équipement de gestion B connaissent le temps de début qui est relatif au slot s₃ dédié à cet appareil domestique.

Les appareils domestiques A1 et A2 et l'équipement de gestion B fonctionnent alors en mode nominal par échange de données émises sur les slots qui leurs sont dédiés. L'équipement de gestion B émet des données, telles que des commandes, pendant le slot s₁ et reçoit des données, telles que par exemple des accusés de réception d'une commande, pendant les autres slots de la trame T, l'appareil domestique A1 émet des données, telles que par exemple un accusé de réception d'une commande, pendant le slot s₂ et reçoit des données, telles que des commandes, pendant les autres slots de la trame T, et l'appareil domestique A2 émet des données, telles que par exemple un accusé de réception d'une commande, pendant le slot s₃ et reçoit des données, telles que des commandes, pendant les autres slots de la trame T.

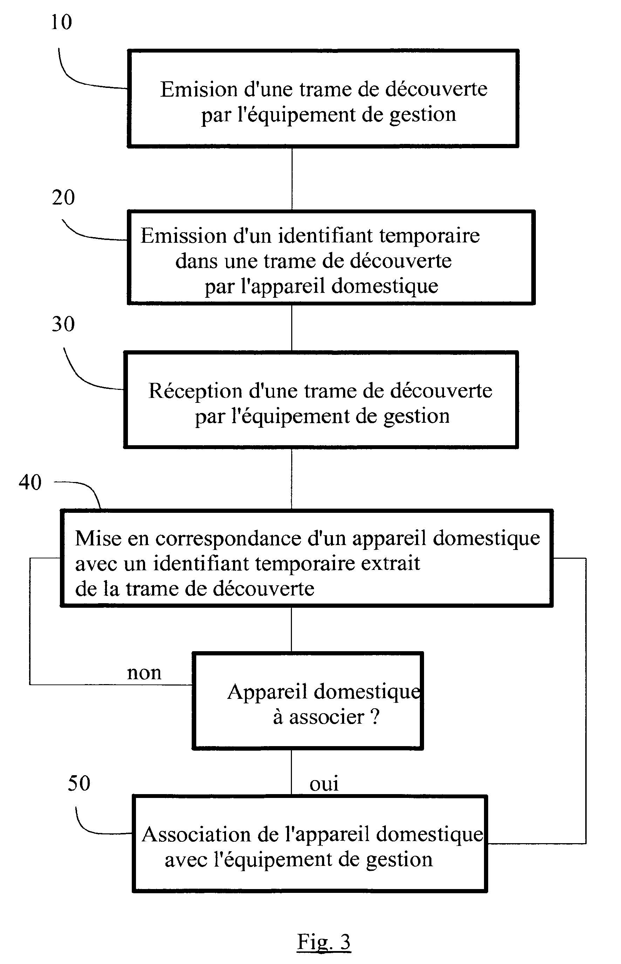

Supposons maintenant qu'un utilisateur souhaite associer l'appareil domestique A3 à l'équipement de gestion B et que cet appareil domestique A3 n'ait pas d'identifiant qui lui est propre. Cet appareil domestique A3 va alors être associé à l'équipement de gestion B suite à l'exécution de l'un des procédés d'association décrits en relation avec la Fig. 3.

La Fig. 3 représente un diagramme des étapes d'un mode de réalisation de procédé d'association de l'appareil domestique A3 par l'équipement de gestion B du système de commande SYST de type TDMA.

L'étape de découverte comporte une étape 10 d'émission d'une trame, dite de découverte D, au cours de laquelle l'équipement de gestion B émet pendant le premier slot ds₁ de la trame de découverte D une donnée DEG qui indique à chaque appareil domestique, y compris A3, qu'il peut émettre pendant l'un des slots de cette trame autre que le premier slot ds₁.

A la Fig. 4 est représenté un exemple d'une trame de découverte D. La trame D est formée d'un nombre N de slots dsᵢ de durée Δ*ᵢ* avec i allant de 1 à N. On peut noter qu'un temps de garde G peut être aménagé entre chaque slot de la trame D. Dans cette éventualité, la durée Δ*ᵢ* est égale à la somme de la durée d'un slot et de la durée d'un temps de garde G. Par la suite, on considère que les durées des slots de la trame de découverte D sont toutes égales à une même valeur Δ.

De préférence, le nombre de slots N est supérieur ou égal à 128.

La donnée DEG est par exemple égale à une valeur entière égale à 0.

L'étape de découverte comporte également une étape 20 d'émission d'un identifiant temporaire par un appareil domestique. Au cours de l'étape 20, l'appareil domestique A3 détermine un identifiant temporaire ID, se synchronise temporellement avec l'équipement de gestion B sur le temps dt₁ de début de la trame de découverte reçue, et calcule le temps *dtᵥ* de début d'un slot dsᵥ de la trame de découverte pour émettre l'identifiant temporaire ID qu'il a déterminé. L'identifiant temporaire ID est alors émis au cours du slot dsᵥ.

Ainsi, à l'issue de l'étape 20, les appareils domestiques du système SYST sont tous synchronisés sur le temps dt₁ de début de la trame découverte D et ont émis leurs identifiants temporaires pendant l'un des slots de la trame découverte D.

L'étape de découverte se poursuit alors par une étape 30 de réception par l'équipement de gestion B d'une trame de découverte D. Au cours de l'étape 30, chaque slot de la trame de découverte D est scruté pour déterminer si il porte un identifiant temporaire ID. Dans ce cas, l'identifiant temporaire ID est extrait de ce slot. Cela sous-entend que plusieurs identifiants temporaires ID peuvent ainsi être extraits de la trame de découverte D, chacun ayant été déterminé par un appareil domestique différent. Chaque identifiant temporaire ID extrait est ensuite présenté à un utilisateur, par exemple, par une représentation visuelle sur un écran de l'équipement de gestion B.

L'étape 30 se poursuit alors par une étape 40 de mise en correspondance d'un appareil domestique avec un identifiant temporaire ID ainsi extrait de la trame de découverte D. Pour cela, l'utilisateur sélectionne un identifiant temporaire présenté, l'équipement de gestion B envoie alors une commande C à destination de l'appareil domestique qui a émis cet identifiant temporaire, en l'occurrence A3. Pour cela, la commande C comporte par exemple l'identifiant temporaire sélectionné qui permet que la commande C ne soit exécutée que par l'appareil domestique A3.

L'appareil domestique A3 accuse alors visuellement réception de cette commande C par exemple en allumant un voyant prévu à cet effet. L'utilisateur observant le voyant allumé de l'appareil domestique A3 en déduit alors que l'identifiant temporaire qui est sélectionné est relatif à l'appareil domestique A3.

Dans le cas où l'appareil domestique A3 est un volet roulant, la commande C peut ordonner la fermeture du volet roulant. Ainsi, l'utilisateur met en correspondance l'identifiant temporaire sélectionné et l'appareil domestique A3 en constatant qu'il se ferme.

Si l'appareil domestique ainsi mis en correspondance avec un identifiant temporaire est un de ceux que l'utilisateur souhaite associer à l'équipement de gestion, l'utilisateur valide la sélection de l'identifiant temporaire présenté par exemple au moyen d'une interface graphique de l'équipement de gestion. L'étape 60 est alors suivie d'une étape 50 d'association classique entre l'appareil domestique ainsi identifié et l'équipement de gestion B.

Si l'appareil domestique ainsi mis en correspondance avec un identifiant temporaire sélectionné n'est pas un de ceux que l'utilisateur souhaite associer à l'équipement de gestion B, l'utilisateur ne valide pas l'identifiant temporaire sélectionné, en sélectionne un autre et l'étape 40 est à nouveau exécutée tant que toutes les identifiants temporaires présentés ne sont pas considérés.

L'étape de découverte se termine lorsque tous les identifiants temporaires d'une trame de découverte D reçue ont été considérés.

Selon une première variante du procédé, l'équipement de gestion émet une trame de découverte suite à une action de l'utilisateur, telle que l'action sur un écran tactile par exemple.

Selon une seconde variante du procédé, l'équipement de gestion B interrompt périodiquement les échanges de trames T pour émettre une trame de découverte D et pour recevoir pendant une durée prédéterminée P les identifiants temporaires émis par d'éventuels nouveaux appareils domestiques au cours de slots de trame de découverte D.

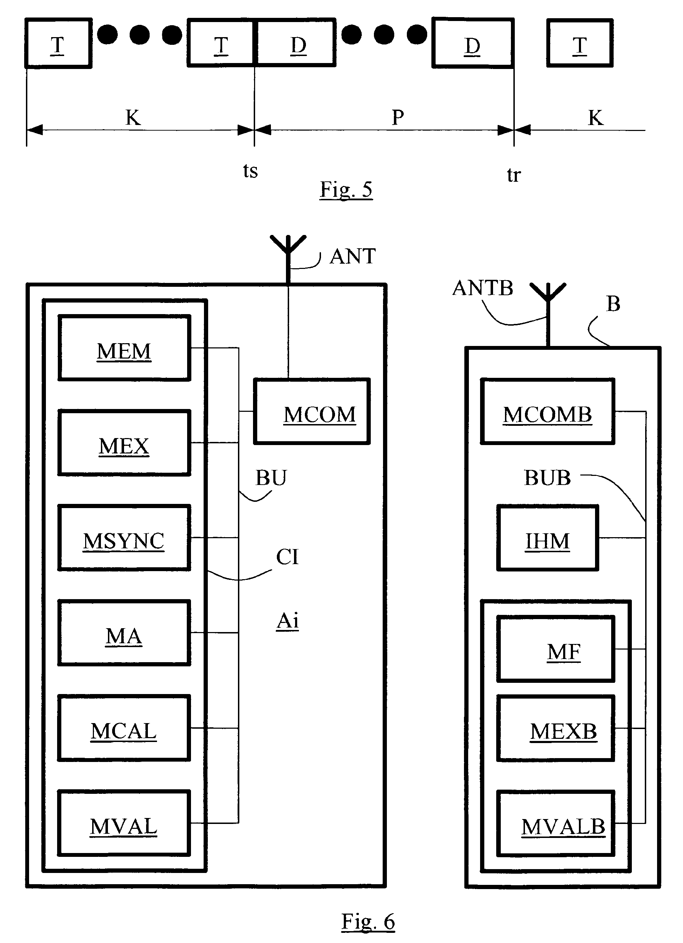

La Fig. 5 illustre cette seconde variante dans le cas où les appareils domestiques A1 et A2 échangent pendant une période K des trames T avec l'équipement de gestion B lors du fonctionnement nominal du système SYST. On peut noter que l'émission de ces trames T n'est pas obligatoirement continue et des périodes de temps sans émission de trame peuvent se produire entre deux émissions de trame. Au bout de chaque période K, c'est-à-dire périodiquement, une trame D est émise par l'équipement de gestion B interrompant alors l'échange de trames T. Cette interruption se produit à un temps tₛ à la Fig. 5 et ce n'est qu'à partir d'un temps tᵣ=tₛ+P où P est une durée préalablement fixée, que l'échange de trames T peut reprendre. La durée P est fixée de manière à ce que l'équipement de gestion ait le temps de recevoir une voire plusieurs trames D. Par exemple, P est égal à un multiple de la durée totale de la trame D.

Selon une troisième variante, la première et seconde variante sont combinées ce qui permet à la trame D d'être émise suite à une action d'un utilisateur mais également périodiquement.

Selon une autre variante du mode de réalisation du procédé, au cours de l'étape 50, la trame D reçue par un appareil domestique est diffusée par ce même appareil domestique.

Cette variante est particulièrement avantageuse car elle permet d'étendre la portée de l'équipement de gestion. En effet, lorsqu'un appareil domestique est installé, l'utilisateur ne sait pas si cet appareil domestique est à même de pouvoir recevoir un signal de puissance suffisante émis par l'équipement de gestion B. Un éloignement trop important entre l'équipement de gestion et cet appareil domestique ou un obstacle entre eux sont des conditions qui peuvent atténuer considérablement la puissance des signaux émis. En utilisant chaque appareil domestique comme émetteur de la trame D, la probabilité qu'un nouvel appareil domestique reçoive un signal de puissance suffisante augmente et ceci permet donc, d'une part, de résoudre les problèmes d'obstacles et, d'autre part, d'étendre la portée des signaux émis par l'équipement de gestion B.

Selon un mode de réalisation du procédé, au cours de l'étape 20, un identifiant temporaire ID comporte en outre une valeur entière *v* choisie aléatoirement parmi un ensemble prédéterminé de valeurs entières. De préférence, cet identifiant temporaire ID est choisi parmi un ensemble de valeurs comprises entre 1 et N, le nombre total de slots de la trame de découverte D.

Au cours de l'étape de découverte, l'identifiant temporaire ID est alors émis au cours du slot dsᵥ dont le temps de début *dtᵥ* est déterminé par *dtᵥ* = *dt*₁ + *v*Δ. On peut noter que le nombre N de slots de la trame de découverte D est suffisamment important, par exemple égal à 128, pour que la probabilité que deux appareils domestiques choisissent la même valeur aléatoire (le même slot de la trame de découverte) soit faible.

Selon un autre mode de réalisation du procédé, au cours de l'étape 20, un identifiant temporaire ID comporte en outre une valeur *RSSIᵥ* qui indique le niveau de puissance de la trame de découverte D reçue par l'appareil domestique A3 et qui a été émise préalablement par l'équipement de gestion B.

Un tel niveau de puissance est habituellement appelé RSSI (Received Signal Strength Indication en anglais) et il est largement connu dans l'état de la technique des méthodes pour déterminer un tel niveau de puissance à partir d'un signal reçu.

Au cours de l'étape de découverte, l'identifiant temporaire ID est alors émis au cours d'un slot dsᵥ dont le temps de début *dtᵥ* est déterminé, par exemple, de la manière suivante. Le niveau de puissance RSSI mesuré par l'appareil domestique est associé à la valeur *RSSIᵥ* qui appartient à un ensemble de (N-1) valeurs discrètes {*RSSI*ₘᵢₙ,...,*RSSI*ₘₐₓ }avec N le nombre de slots de la trame de découverte D. Les valeurs minimale et maximale de cet ensemble sont par exemple déterminées de manière empirique et chaque valeur *RSSIᵢ* de cet ensemble identifie un slot dsᵢ de la trame de découverte D autre que le premier slot ds₁. La valeur *RSSI*ₘᵢₙ est relative au slot ds₂ et la valeur *RSSI*ₘₐₓ est relative au slot ds_{N}. Ainsi, le slot dsᵥ est déterminé à partir de la valeur *RSSIᵥ* et le temps de début de ce slot *dtᵥ* est déterminé par l'appareil domestique par *dtᵥ = dt*₁ + *RSSIᵥ*Δ.

Selon un autre mode de réalisation du procédé, un identifiant temporaire ID comporte une valeur *RSSIᵥ* qui indique le niveau de puissance de la trame de découverte D reçue par un appareil domestique et émise préalablement par l'équipement de gestion B et une valeur *v* choisie aléatoirement parmi un ensemble prédéterminé de valeurs entières.

Au cours de l'étape de découverte, l'identifiant temporaire ID est alors émis au cours d'un slot dsᵥ dont le temps de début *dtᵥ* est déterminé, par exemple, au cours du slot dsᵥ dont le temps de début *dtᵥ* est déterminé par *dtᵥ* = *dt*₁ + *v*Δ.

Selon un mode de réalisation du procédé, au cours de l'étape 20, un identifiant temporaire ID est émis par un appareil domestique si le niveau de puissance d'une trame de découverte D reçue par cet appareil domestique est supérieur à un seuil prédéterminé S.

Selon un mode de réalisation du procédé, au cours de l'étape 20, un identifiant temporaire ID est émis par un appareil domestique quel que soit le niveau de puissance du signal SI reçu par cet appareil, et au cours de l'étape 30, l'équipement de gestion B ne considère un identifiant temporaire ID extrait que si ce niveau de puissance est supérieur à un seuil prédéterminé S.

Le seuil S est prédéterminé, par exemple, de manière empirique.

Le procédé d'association décrit ci-dessus peut être mis en oeuvre de diverses manières, notamment sous forme câblée ou sous forme logicielle. L'invention concerne donc également, en tant que moyen utile à sa mise en oeuvre, un produit programme d'ordinateur téléchargeable via un réseau de télécommunications et/ou stocké dans une mémoire d'un circuit programmable et/ou stocké sur un support mémoire destiné à coopérer avec un lecteur dudit circuit programmable, ledit programme étant destiné à être mis en oeuvre au sein d'un appareil domestique apte à émettre et/ou à recevoir des trames de découverte, lequel programme inclut au moins une instruction ordonnant l'exécution de chaque étape de l'un des procédés de découverte décrit ci-dessus.

La Fig. 6 représente un synoptique de la structure interne de l'équipement de gestion B et d'un appareil domestique Aᵢ du système SYST qui mettent en oeuvre l'un des procédés d'association de la Fig. 3.

L'appareil domestique Aᵢ est un appareil de communication par radiofréquence classique qui est prévu pour recevoir/émettre des trames de type TDMA. Il comporte pour cela des moyens de communication MCOM et une antenne radiofréquence ANT.

Toutefois, l'appareil domestique Aᵢ est particulier car il comporte, de plus, une mémoire MEM prévue pour stocker en outre le nombre N de slots de la trame de découverte D, la durée de chaque slot de la trame de découverte D, la donnée DEG qui indique audit appareil domestique qu'il peut émettre pendant l'un quelconque des slots de la trame de découverte D autre que le premier slot et éventuellement la durée P. L'appareil domestique Aᵢ comporte également des moyens MEX pour extraire une donnée DEG d'un slot d'une trame de découverte D reçue, des moyens MSYNC pour déterminer le temps de début d'une trame de découverte D reçue, des moyens MA pour déterminer un identifiant temporaire ID tel que expliqué précédemment, des moyens MCAL pour calculer, tel que expliqué précédemment, le temps de début du slot relatif à un identifiant temporaire ID, et des moyens MVAL associés aux moyens de communication pour qu'un identifiant temporaire ID soit émis au cours d'un slot dtᵥ déterminé de la trame de découverte D.

Les moyens MEX, MSYNC, MA, MCAL et MVAL sont par exemple mis en oeuvre par les instructions d'un programme exécuté par un circuit programmable CI qui est en communication par un bus BU avec la mémoire MEM et les moyens MCOM.

L'équipement de gestion B est un appareil de communication par radiofréquence classique qui est prévu pour recevoir/émettre des trames de type TDMA. Il comporte pour cela des moyens de communication MCOMB et une antenne radiofréquence ANTB.

Toutefois, l'équipement de gestion B est particulier car il comporte des moyens MF pour former une trame de découverte D dont le premier slot porte une donnée DEG qui indique à un appareil domestique Aᵢ qu'il peut émettre pendant l'un quelconque des slots de cette trame autre que le premier slot. L'équipement de gestion B comporte également des moyens MEXB pour extraire un identifiant temporaire ID d'un slot d'une trame de découverte reçue, des moyens graphiques IHM pour présenter une identifiant temporaire ID ainsi extrait, pour que l'utilisateur puisse sélectionner un identifiant temporaire présenté, pour que la validation d'un identifiant temporaire sélectionné provoque le lancement d'une phase d'association avec l'appareil domestique, et, selon un mode de réalisation, pour lancer l'un des procédés d'association de la Fig. 3. Les moyens IHM sont par exemple un écran tactile combiné à une logique programmée.

L'équipement de gestion B comporte également des moyens MVALB associés aux moyens de communication MCOMB pour envoyer une commande à un appareil domestique qui est relatif à cet identifiant temporaire ID.

Les moyens MF, MEXB et MVALB sont par exemple mis en oeuvre par les instructions d'un circuit programmable CIB qui est en communication par un bus BUB avec les moyens IHM et les moyens MCOMB.

## Revendications

1. Procédé d'association entre au moins un appareil domestique (A3) et un équipement de gestion (B) d'un système de commande à distance, ledit procédé comportant une étape de découverte au cours de laquelle chaque appareil domestique (A3) détermine un identifiant temporaire (ID) qu'il émet à destination de l'équipement de gestion (B), **caractérisé en ce que** le système de commande à distance est de type TDMA et **en ce que** l'étape de découverte comporte
- une étape (10) d'émission d'une trame (D), dite de découverte, au cours de laquelle l'équipement de gestion (B) émet pendant le premier slot (ds₁) de la trame de découverte (D) une donnée (DEG) qui indique à chaque appareil domestique (A3) qu'il peut émettre l'identifiant temporaire pendant l'un des slots de cette trame autre que le premier slot, et
- une étape d'émission par un appareil domestique (A3) de l'identifiant temporaire, au cours de laquelle l'appareil domestique se synchronise temporellement avec l'équipement de gestion (B) sur le temps (dt₁) de début de la trame de découverte reçue, calcule le temps (dtᵥ) de début du slot (dsᵥ) de la trame de découverte pour émettre l'identifiant temporaire (ID) qu'il a déterminé, et émet cet identifiant temporaire (ID) au cours du slot (dsᵥ) débutant au temps ainsi calculé.

2. Procédé selon la revendication 1, dans lequel l'étape de découverte comporte en outre une étape (30) de réception par l'équipement de gestion (B) de la trame de découverte au cours de laquelle chaque slot de la trame de découverte D est scruté pour déterminer si il porte un identifiant temporaire (ID), une étape (40) de mise en correspondance d'un appareil domestique avec un identifiant temporaire extrait de la trame de découverte reçue au cours de laquelle l'utilisateur sélectionne un identifiant temporaire présenté, l'équipement de gestion envoie alors une commande à destination de l'appareil domestique qui a émis cet identifiant temporaire (ID) et l'appareil domestique qui accuse visuellement réception de la commande est alors mis en correspondance par l'utilisateur avec l'identifiant temporaire sélectionné, si l'appareil domestique ainsi mis en correspondance est un de ceux que l'utilisateur souhaite associer à l'équipement de gestion, l'utilisateur valide alors la sélection de l'identifiant temporaire et l'étape de mise en correspondance est alors suivie d'une étape (50) d'association entre l'appareil domestique ainsi identifié et l'équipement de gestion.

3. Procédé selon la revendication 1 ou 2, dans lequel l'équipement de gestion (B) émet une trame de découverte (D) suite à une action de l'utilisateur, telle que l'action sur un écran tactile par exemple.

4. Procédé selon l'une des revendications 1 à 3, dans lequel l'équipement de gestion (B) interrompt périodiquement le fonctionnement nominal du système pour émettre une trame de découverte (D) et pour recevoir pendant une durée prédéterminée (P) les identifiants temporaires (ID) émis par d'éventuels nouveaux appareils domestiques au cours de slots de trame de découverte (D).

5. Procédé selon la revendication 4, **caractérisé en ce que** la durée prédéterminée de réception de trame de découverte est un multiple de la durée de trames échangées au cours du fonctionnement nominal du système.

6. Procédé selon l'une des revendications 1 à 5, dans lequel une trame de découverte qui est reçue par un appareil domestique est ensuite diffusée par cet appareil domestique.

7. Procédé selon l'une des revendications précédentes, dans lequel l'identifiant temporaire (ID) comporte en outre une valeur entière choisie aléatoirement parmi un ensemble prédéterminé de valeurs entières.

8. Procédé selon l'une des revendications précédentes, dans lequel l'identifiant temporaire (ID) comporte en outre une valeur qui indique le niveau de puissance d'une trame de signal reçue par un appareil domestique et émise préalablement par l'équipement de gestion.

9. Procédé selon la revendication 8, dans lequel l'identifiant temporaire (ID) est émis par un appareil domestique si le niveau de puissance de la trame de signal reçue par cet appareil domestique est supérieur à un seuil prédéterminé (S).

10. Procédé selon la revendications 8, dans lequel l'identifiant temporaire (ID) est émis par un appareil domestique quel que soit le niveau de puissance de la trame de signal reçue par cet appareil domestique mais n'est considéré par l'équipement de gestion que si ce niveau de puissance est supérieur à un seuil prédéterminé (S).

11. Appareil domestique d'un système de commande à distance de type TDMA prévu pour communiquer par échange de trames de signaux radiofréquences, **caractérisé en ce qu'**il comporte
une mémoire (MEM) prévue pour stocker en outre le nombre (N) de slots d'une trame, dite de découverte, qui est émise par un équipement de gestion et dont le premier slot est destiné à porter une donnée (DEG) qui indique audit appareil domestique qu'il peut émettre un identifiant temporaire pendant l'un quelconque des slots de cette trame autre que ce premier slot, une durée de chaque slot de la trame de découverte (D), et une durée (P) prédéterminée pendant laquelle ledit équipement de gestion émet ladite trame de découverte et reçoit les identifiants temporaires,
des moyens (MSYNC) pour déterminer le temps de début d'une trame de découverte reçue,
des moyens (MA) pour déterminer l'identifiant temporaire,
des moyens (MCAL) pour calculer le temps de début du slot d'une trame de découverte qui est relatif à l'identifiant temporaire, et
des moyens (MVAL) pour que l'identifiant temporaire soit émis au cours du slot de la trame de découverte qui est relatif à l'identifiant temporaire.

12. Equipement de gestion d'un système de commande à distance de type TDMA prévu pour communiquer par échange de trames de signaux radiofréquences, **caractérisé en ce qu'**il comporte
des moyens (MF) pour former une trame, dite de découverte (D) dont le premier slot est destiné à porter une donnée (DEG) qui indique à un appareil domestique (Aᵢ) dudit système qu'il peut émettre un identifiant temporaire pendant l'un quelconque des slots de cette trame autre que le premier slot,
des moyens (MEXB) pour extraire un identifiant temporaire d'un slot d'une trame de découverte reçue,
des moyens graphiques (IHM) pour présenter l'identifiant temporaire ainsi extrait, pour que l'utilisateur puisse sélectionner un identifiant temporaire présenté,
pour que la validation d'un identifiant temporaire sélectionné provoque le lancement d'une phase d'association avec l'appareil domestique, et
des moyens (MVALB) pour envoyer une commande à l'appareil domestique qui est relatif à un identifiant temporaire.

13. Equipement de gestion selon la revendication 12 dans lequel les moyens graphiques sont prévus pour lancer l'un des procédés de découverte conformes à l'une des revendications 1 à 10.

14. Système de commande à distance d'appareils domestiques à partir d'un équipement de gestion, **caractérisé en ce qu'**il comporte au moins un appareil domestique conforme à la revendication 11 et un équipement de gestion conforme à la revendication 12 ou 13.

15. Support d'informations comprenant un programme d'ordinateur ; ledit programme comportant des instructions permettant de mettre en oeuvre le procédé selon l'une des revendications 1 à 10, lorsqu'il est chargé et exécuté par appareil domestique conforme à la revendication 11 et un équipement de gestion conforme à l'une des revendications 12 à 13.

## Claims

1. Process for linking at least one home appliance (3) and a controller (B) of a remote control system, said process comprising a discovery step in which each home appliance (A3) establishes a temporary identifier (ID) which it transmits to the controller (B), **characterised in that** the remote control system is of the TDMA type and **in that** the discovery step comprises
- a step (10) of transmission of a frame (D), called the discovery frame, during which the controller (B) transmits during the first slot (ds₁) of the discovery frame (D) a piece of data (DEG) which indicates to each home appliance (A3) that it can transmit the temporary identifier during one of the slots of the frame other than the first slot, and
- a step of transmission by a home appliance (A3) of the temporary identifier, during which the home appliance is synchronised in terms of time with the controller (B) to the time (dt₁) of the received discovery frame, calculates the start time (dtᵥ) of the slot (ds_{ν}) of the discovery frame in order to transmit the temporary identifier (ID) that it has established, and transmits the temporary identifier (ID) during the slot (ds_{ν}) starting at the time thus calculated.

2. Process according to claim 1, in which the discovery step further comprises a step (30) in which the controller (B) receives the discovery frame, during which each slot of the discovery frame D is examined in order to determine whether it carries a temporary identifier (ID), a step (40) of matching a home appliance with a temporary identifier extracted from the received discovery frame, during which the user selects a displayed temporary identifier, the controller then sends a command to the home appliance which transmitted the temporary identifier (ID), and the home appliance, which visually acknowledges receipt of the command, is then matched by the user with the selected temporary identifier if the home appliance thus matched is one of those which the user wishes to associate with the controller, the user then validates the selection of the temporary identifier, and the matching step is then followed by a step (50) of linking the home appliance so identified and the controller.

3. Process according to claim 1 or 2, in which the controller (B) transmits a discovery frame (D) following an action by the user, such as action on a touch screen, for example.

4. Process according to any one of claims 1 to 3, in which the controller (B) periodically interrupts the nominal operation of the system in order to transmit a discovery frame (D) and to receive for a predetermined time (P) the temporary identifiers (ID) transmitted by any new home appliances during discovery frame slots (D).

5. Process according to claim 4, **characterised in that** the predetermined time for receiving discovery frames is a multiple of the time for which frames are exchanged during nominal operation of the system.

6. Process according to any one of claims 1 to 5, in which a discovery frame which is received by a home appliance is subsequently broadcast by that home appliance.

7. Process according to any one of the preceding claims, in which the temporary identifier (ID) further comprises a whole value chosen at random from a predetermined set of whole values.

8. Process according to any one of the preceding claims, in which the temporary identifier (ID) further comprises a value which indicates the power level of a signal frame received by a home appliance and previously transmitted by the controller.

9. Process according to claim 8, in which the temporary identifier (ID) is transmitted by a home appliance if the power level of the signal frame received by the home appliance is greater than a predetermined threshold (S).

10. Process according to claim 8, in which the temporary identifier (ID) is transmitted by a home appliance whatever the power level of the signal frame received by the home appliance but is only considered by the controller if that power level is greater than a predetermined threshold (S).

11. Home appliance of a remote control system of the TDMA type provided to communicate by exchange of radiofrequency signal frames, **characterised in that** it comprises
a memory (MEM) provided to further store the number (N) of slots of a frame, called the discovery frame, which is transmitted by a controller and the first slot of which is intended to carry a piece of data (DEG) which indicates to said home appliance that it can transmit a temporary identifier during any one of the slots of the frame other than the first slot, a duration of each slot of the discovery frame (D), and a predetermined time (P) for which said controller transmits said discovery frame and receives the temporary identifiers,
means (MSYNC) for determining the start time of a received discovery frame,
means (MA) for establishing the temporary identifier,
means (MCAL) for calculating the start time of the slot of a discovery frame which is related to the temporary identifier, and
means (MVAL) so that the temporary identifier is transmitted during the slot of the discovery frame that is related to the temporary identifier.

12. Controller for a remote control system of the TDMA type provided to communicate by exchange of radiofrequency signal frames, **characterised in that** it comprises
means (MF) for forming a frame, called the discovery frame (D), the first slot of which is intended to carry a piece of data (DEG) which indicates to a home appliance (Aᵢ) of said system that it can transmit a temporary identifier during any one of the slots of the frame other than the first slot,
means (MEXB) for extracting a temporary identifier from a slot of a received discovery frame,
graphical means (IHM) for displaying the temporary identifier thus extracted so that the user is able to select a displayed temporary identifier, so that the validation of a selected temporary identifier causes initiation of a phase of linking with the home appliance, and means (MVALB) for sending a command to the home appliance which is related to a temporary identifier.

13. Controller according to claim 12, in which the graphical means are provided for initiating one of the discovery processes according to any one of claims 1 to 10.

14. System for the remote control of home appliances from a controller, **characterised in that** it comprises at least one home appliance according to claim 11 and a controller according to claim 12 or 13.

15. Data storage medium comprising a computer program, said program comprising instructions permitting the process according to any one of claims 1 to 10 to be carried out, when it is loaded and executed by a home appliance according to claim 11 and a controller according to either claim 12 or claim 13.

## Patentansprüche

1. Verbindungsverfahren zwischen mindestens einem Haushaltsgerät (A3) und einem Steuergerät (B) eines Fernsteuerungssystems, welches Verfahren einen Erfassungsschritt enthält, während dem jedes Haushaltsgerät (A3) eine temporäre Kennung (ID) festlegt, die es zu dem Steuergerät (B) sendet, **dadurch gekennzeichnet, dass** das Fernsteuerungssystem vom Typ TDMA ist und dadurch, dass der Erfassungsschritt enthält:
- einen Schritt zum Senden (10) eines Datenblocks (D), des sogenannten Erfassungsblocks, während dem das Steuergerät (B) während des ersten Slots (ds₁) des Erfassungs-Datenblocks (D) eine Angabe (DEG) sendet, die jedem Haushaltsgerät (A3) anzeigt, dass es die temporäre Kennung während eines der Slots mit Ausnahme des ersten Slots dieses Datenblocks senden kann, und
- einen Schritt zum Senden der temporären Kennung durch ein Haushaltsgerät (A3), während dem sich das Haushaltsgerät mit dem Steuergerät (B) auf die Anfangszeit (dt₁) des empfangenen Erfassungs-Datenblocks zeitlich synchronisiert, die Anfangszeit (dtᵥ) des Slots (dsᵥ) des Erfassungs-Datenblocks berechnet, um die temporäre Kennung (ID) zu senden, die es festgelegt hat, und diese temporäre Kennung (ID) während des Slots (dsᵥ) sendet, der an dem auf diese Weise berechneten Zeitpunkt beginnt.

2. Verfahren nach Anspruch 1, bei welchem der Erfassungsschritt des Weiteren einen Schritt (30) zum Empfangen des Erfassungs-Datenblocks durch das Steuergerät (B) aufweist, während dem jeder Slot des Erfassungs-Datenblocks (D) geprüft wird, um zu ermitteln, ob er eine temporäre Kennung (ID) enthält, einen Schritt (40) zum Abgleichen eines Haushaltsgeräts mit einer temporären, aus dem empfangenen Erfassungs-Datenblock extrahierten Kennung, während dem der Benutzer eine angegebene temporäre Kennung auswählt, wobei das Steuergerät dann einen Befehl zu dem Haushaltsgerät sendet, das diese temporäre Kennung (ID) gesendet hat, und das Haushaltsgerät, das den Empfang des Befehls visuell bestätigt, dann vom Benutzer mit der ausgewählten temporären Kennung in Übereinstimmung gebracht wird und dann, wenn das auf diese Weise in Übereinstimmung gebrachte Haushaltsgerät eines von denjenigen ist, die der Benutzer mit dem Steuergerät verbinden möchte, der Benutzer anschließend die Auswahl der temporären Kennung validiert, und auf den Abgleichschritt dann ein Verbindungsschritt (50) zwischen dem so identifizierten Haushaltsgerät und dem Steuergerät folgt.

3. Verfahren nach Anspruch 1 oder 2, bei welchem das Steuergerät (B) einen Erfassungs-Datenblock (D) im Anschluss an eine Aktion des Benutzers sendet, wie zum Beispiel der Aktion auf einem Berührungsbildschirm.

4. Verfahren nach einem der Ansprüche 1 bis 3, bei welchem das Steuergerät (B) periodisch den Nominalbetrieb des Systems unterbricht, um einen Erfassungs-Datenblock (D) zu senden und während eines vorbestimmten Zeitraums (P) die temporären Kennungen (ID) zu empfangen, die von möglichen neuen Haushaltsgeräten während der Slots des Erfassungs-Datenblocks (D) gesendet wurden.

5. Verfahren nach Anspruch 4, **dadurch gekennzeichnet, dass** der vorbestimmte Zeitraum zum Empfangen des Erfassungs-Datenblocks ein Vielfaches des Zeitraums der Datenblöcke ist, die während des Nominalbetriebs des Systems ausgetauscht werden.

6. Verfahren nach einem der Ansprüche 1 bis 5, bei welchem ein Erfassungs-Datenblock, der von einem Haushaltsgerät empfangen wird, anschließend durch dieses Haushaltsgerät weiter übertragen wird.

7. Verfahren nach einem der vorhergehenden Ansprüche, bei welchem die temporäre Kennung (ID) des Weiteren einen ganzen, zufällig aus einer vorbestimmten Gesamtheit von ganzen Werten ausgewählten Wert aufweist.

8. Verfahren nach einem der vorhergehenden Ansprüche, bei welchem die temporäre Kennung (ID) des Weiteren einen Wert aufweist, der den Leistungspegel eines von einem Haushaltsgerät empfangenen und zuvor von dem Steuergerät gesendeten Datenblocksignals angibt.

9. Verfahren nach Anspruch 8, bei welchem die temporäre Kennung (ID) von einem Haushaltsgerät gesendet wird, wenn der Leistungspegel des von diesem Haushaltsgerät empfangen Datenblocksignals höher als ein vorbestimmter Schwellenwert (S) ist.

10. Verfahren nach Anspruch 8, bei welchem die temporäre Kennung von einem Haushaltsgerät unabhängig vom Leistungspegel des von diesem Haushaltsgerät empfangenen Datenblocksignals gesendet wird, aber von dem Steuergerät erst dann berücksichtigt wird, wenn der Leistungspegel über einem vorbestimmten Schwellenwert (S) liegt.

11. Haushaltsgerät in einem Fernsteuerungssystem des Typs TDMA, das dazu vorgesehen ist, durch Austausch von Hochfrequenz-Datenblocksignalen zu kommunizieren, **dadurch gekennzeichnet, dass** es enthält:
einen Speicher (MEM), der unter anderem zum Speichern der Anzahl (N) von Slots eines Datenblocks, des sogenannten Erfassungsblocks, der von einem Steuergerät gesendet wird und dessen erster Slot dazu bestimmt ist, eine Angabe (DEG) zu tragen, die dem Haushaltsgerät anzeigt, dass es eine temporäre Kennung während irgendeines beliebigen Slots dieses Datenblocks mit Ausnahme des ersten Slots senden kann, einer Zeitdauer jedes Slots des Erfassungs-Datenblocks (d) und einer vorbestimmten Zeitdauer (P) vorgesehen ist, während der das Steuergerät den Erfassungs-Datenblock sendet und die temporären Kennungen empfängt,
Mittel (MSYNC) zum Ermitteln des Anfangszeitpunkts eines empfangenen Erfassungs-Datenblocks,
Mittel (MA) zum Ermitteln der temporären Kennung,
Mittel (MCAL) zum Berechnen des Anfangszeitpunkts des Slots eines Erfassungs-Datenblocks, der auf die temporäre Kennung bezogen ist, und
Mittel (MVAL), damit die temporäre Kennung während des Slots des Erfassungs-Datenblocks gesendet wird, der auf die temporäre Kennung bezogen ist.

12. Steuergerät eines Fernsteuerungssystems des Typs TDMA, das dafür vorgesehen ist, durch Austausch von Hochfrequenz-Datenblocksignalen zu kommunizieren, **dadurch gekennzeichnet, dass** es enthält:
Mittel (MF) zum Bilden eines Datenblocks, des sogenannten Erfassungsblocks (D), dessen erster Slot dazu bestimmt ist, eine Angabe (DEG) zu tragen, die einem Haushaltsgerät (Aᵢ) des Systems anzeigt, dass es während irgendeines beliebigen Slots dieses Datenblocks mit Ausnahme des ersten Slots eine temporäre Kennung senden kann,
Mittel (MEXB) zum Extrahieren einer temporären Kennung aus einem Slot eines empfangenen Erfassungs-Datenblocks,
grafische Mittel (IHM) zum Darstellen der auf diese Weise extrahierten temporären Kennung, so dass der Benutzer eine dargestellte temporäre Kennung auswählen kann, damit die Validierung einer ausgewählten temporären Kennung den Start eines Verbindungsschritts mit dem Haushaltsgerät auslöst, und
Mittel (MVALB) zum Senden eines Befehls an das Haushaltsgerät, das auf eine temporäre Kennung bezogen ist.

13. Steuergerät nach Anspruch 12, bei dem die grafischen Mittel dazu vorgesehen sind, eines der Erfassungsverfahren gemäß einem der Ansprüche 1 bis 10 zu starten.

14. Fernsteuerungssystem für Haushaltsgeräte von einem Steuergerät aus, **dadurch gekennzeichnet, dass** es mindestens ein Haushaltsgerät gemäß Anspruch 11 und ein Steuergerät gemäß Anspruch 12 oder 13 enthält.

15. Datenträger mit einem Computerprogramm, welches Programm Anweisungen enthält, die das Umsetzen des Verfahrens nach einem der Ansprüche 1 bis 10 gestatten, wenn es in dem Haushaltsgerät gemäß Anspruch 11 und einem Steuergerät gemäß einem der Ansprüche 12 bis 13 geladen ist und ausgeführt wird.
